# DEMANDE DE BREVET EUROPEEN

(11) **EP 4 755 493 A1**
(43) Date de publication de la demande: **10.06.2026**
(21) Numéro de dépôt: 25215574.2
(22) Date de dépôt: 13.11.2025
(51) Int. Cl.: B01D 53/00, B01D 53/26, F25J 3/06, B01D 51/10, F25J 3/02

(54) **PROCÉDÉ ET APPAREIL DE SÉCHAGE ET PURIFICATION D'UN FLUIDE CONTENANT DU DIOXYDE DE CARBONE ET DE L'EAU**

(30) Priorité: 05.12.2024 FR 2413520
(71) Demandeur: L'Air Liquide, Société Anonyme pour l'Etude et l'Exploitation des Procédés Georges Claude, 75007 Paris (FR)
(72) Inventeur: LECLERC, Mathieu, 75007 PARIS (FR); POUCIN, Cyprien, 75007 PARIS (FR)
(74) Mandataire: Air Liquide

(57) **Abrégé**

Dans un procédé de séchage et purification d'un fluide (F) contenant du CO2 et de l'eau, on refroidit du fluide contre de l'eau (1), l'eau de refroidissement se réchauffant, on sépare de l'eau condensée (3,BD) afin d'obtenir un fluide (F_{d}) partiellement séché, on sèche du fluide partiellement séché afin d'obtenir un fluide séché (F_{dd}), on réchauffe du fluide séché contre de l'eau qui se refroidit afin d'obtenir de l'eau (5) et un fluide séché (F_{ddd}) à une septième température T7, on refroidit de l'eau par échange de chaleur avec une source de frigories (F1) générant de l'eau (1) et on utilise de l'eau générée pour refroidir le fluide.

## Description

La présente invention est relative à un procédé et à un appareil de séchage et purification d'un fluide contenant du dioxyde de carbone et de l'eau.

Les unités de capture et purification du CO₂ provenant d'une source relativement diluée (10 à 50% mol de CO₂), fonctionnant par exemple par condensation partielle et/ou distillation et/ou par solidification, nécessitent une étape de pré-concentration du CO₂ afin de rendre l'étape de purification principale plus efficace (par exemple la condensation partielle du CO₂). Cette étape de pré-concentration est le plus souvent réalisée via un PSA CO₂ ou des membranes. Lorsque la source de CO₂ est humide et destinée à la cryogénie, un séchage est requis, typiquement installé avant l'étape de pré-concentration. Le sécheur est alors de relativement grande taille car il traite l'intégralité de la source non pré-concentrée. Un refroidissement préalable à base d'eau froide permet de condenser un maximum d'eau et de réduire la taille du sécheur. L'invention concerne l'optimisation de cette étape de refroidissement et de séchage.

Il est connu de FR2884307 de détendre le reliquat de l'étape de pré-concentration pour produire du froid et de refroidir de l'eau par contact direct avec le reliquat détendu.

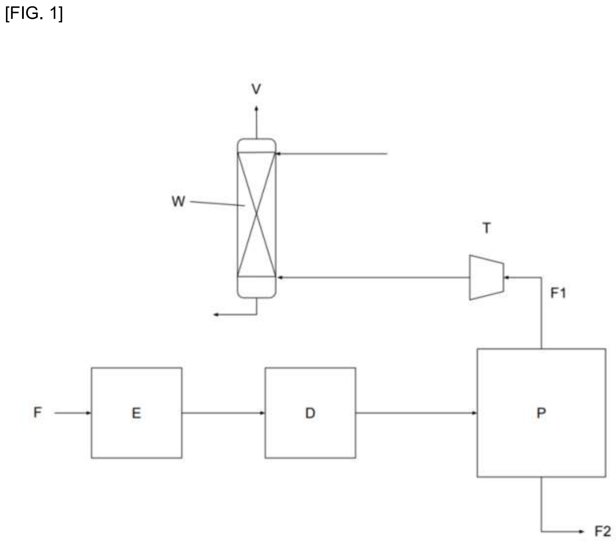

[FIG.1] illustre un procédé selon l'art antérieur dans lequel un fluide à une première température T1 contenant du dioxyde de carbone ainsi qu'au moins une impureté plus légère que le dioxyde de carbone choisie dans la liste : oxygène, azote, argon, monoxyde de carbone, méthane, hélium et hydrogène ainsi que de l'eau est traité par les étapes suivantes:
a) refroidissement du fluide à la première température T1 jusqu'à une seconde température T2 dans un échangeur de chaleur E,
b) séchage du fluide partiellement séché à la seconde température T2 par passage à travers un adsorbant D afin d'obtenir un fluide séché,
c) séparation du fluide séché par adsorption dans une unité de prétraitement P produisant un fluide F1 appauvri en dioxyde de carbone et un fluide F2 enrichi en dioxyde de carbone.

Le fluide F1 appelé reliquat est détendu dans une turbine T et utilisé pour refroidir de l'eau dans une tour par échange de chaleur direct. Le fluide détendu est envoyé en bas de la tour W alimentée en tête par de l'eau à refroidir. Du fluide appauvri en dioxyde de carbone V sort en tête de la tour W et l'eau refroidie sort en bas de la tour.

### Problème résolu par l'invention

Il est connu de générer l'eau refroidie par mise en contact d'eau avec le reliquat de l'étape de pré-concentration après détente. Ce reliquat est appauvri en CO₂ et enrichi en un autre composant du fluide à séparer, par exemple l'azote.

Une autre source de frigories pourrait remplacer le reliquat détendu.

L'invention prévoit de pomper l'eau refroidie par la source de frigories et de l'utiliser pour refroidir le fluide à séparer contenant entre 10 et 50 % mol CO₂ et de l'eau. Cet échange thermique avec le fluide à séparer peut avoir lieu dans un échangeur de chaleur ou directement dans une tour de refroidissement. L'eau utilisée pour refroidir le fluide se réchauffe et est éventuellement détendue. De l'eau présente dans le fluide à séparer se condense suite au refroidissement et est éliminée sous forme de condensat. Le fluide contient encore de l'eau et est envoyé se sécher dans un sécheur, par exemple par adsorption à bascule de température.

La capacité de refroidissement du fluide à séparer est égale à la capacité de refroidissement de l'eau par la source de frigories, cette dernière pouvant être par exemple le reliquat de l'étape de pré-concentration. Si la température du fluide à séparer avant refroidissement à l'eau refroidie par la source de frigories est trop élevée la température après refroidissement à l'eau fraîche ne pourra pas être aussi basse que prévue. Dans le cas où la source de frigories est le reliquat détendu, si le débit de reliquat de l'étape de pré-concentration après détente est relativement trop faible, la température après refroidissement à l'eau refroidie ne pourra pas être aussi basse que prévue. Ceci peut arriver quand le fluide contient trop peu de l'autre composant.

Alors moins d'eau contenue dans le fluide à séparer sera condensée amenant à un grossissement du sécheur qui suit.

De plus, la capacité de refroidissement étant limitée, le débit d'eau refroidi sera aussi limité. Cela va impliquer son réchauffement important face au fluide à séparer. Ainsi, cet échange sera contraint du côté froid (où l'on cherche à refroidir au maximum) et au côté chaud (le débit étant faible, l'eau refroidie va se réchauffer jusqu'à une température proche de la source humide). En conséquence, la taille du moyen d'échange entre le fluide à séparer et l'eau refroidie par la source de frigories sera plus importante, ce qui implique une grande surface d'échange pour un échangeur de chaleur indirect ou une plus haute zone d'échange pour une tour à contact direct.

Le fluide séché dans le sécheur peut être destiné à une étape de préconcentration qui n'est pas nécessairement optimisée pour des températures relativement froides. C'est en particulier vrai pour une unité d'adsorption à bascule de pression (PSA). Ainsi, dans le cas d'un refroidissement avant le sécheur, l'étape de préconcentration s'effectue à des températures relativement basses et l'unité de séparation en aval est donc moins efficace et / ou de plus grande taille.

Enfin, de la même manière, si l'étape de préconcentration est opérée à relativement basse température, son reliquat sera le plus souvent à basse température aussi. Étant détendu le plus souvent dans une turbine (générant de la puissance mécanique) avant son utilisation pour la génération d'eau fraîche, sa relative basse température induit une récupération d'énergie plus basse ou requiert une consommation de chaleur supplémentaire avant la détente pour compenser cet effet. Selon un objet de l'invention, il est prévu un procédé de séchage et purification d'un fluide à une première température T1 contenant entre 10 et 50 % molaire de dioxyde de carbone ainsi qu'au moins une impureté plus légère que le dioxyde de carbone choisie dans la liste : oxygène, azote, argon, monoxyde de carbone, méthane, hélium et hydrogène ainsi que de l'eau comprenant les étapes suivantes:
a) refroidissement du fluide à la première température T1 jusqu'à une seconde température T2 contre de l'eau à une troisième température T3 inférieure à la première température T1 et condensation partielle de l'eau contenue dans le fluide, l'eau de refroidissement se réchauffant jusqu'à une quatrième température T4,
b) séparation de l'eau condensée afin d'obtenir un fluide partiellement séché à la seconde température T2,
c) séchage du fluide partiellement séché à la seconde température T2 par passage à travers un adsorbant afin d'obtenir un fluide séché à une cinquième température T5,
d) réchauffement du fluide séché à la cinquième température T5 contre de l'eau qui se refroidit afin d'obtenir de l'eau à une sixième température T6 et un fluide séché à une septième température T7,
e) refroidissement de l'eau à la sixième température T6 par échange de chaleur avec une source de frigories à une huitième température T8 plus froide que la sixième température T6 générant de l'eau de préférence à la troisième température T3, et
f) utilisation de l'eau générée, de préférence à la troisième température T3, lors de l'étape e) pour refroidir le fluide à la première température T1 lors de l'étape a).

Selon d'autres aspects facultatifs :
- le fluide séché à la septième température T7 est séparé en une première fraction à une neuvième température T9 plus concentrée en CO₂ que le fluide séché à la septième température T7 et une seconde fraction à une dixième température T10 moins concentrée en CO₂ que le fluide séché à la septième température T7,
- la seconde fraction à la dixième température T10 est détendue, optionnellement après chauffage, générant une seconde fraction à la huitième température T8 utilisée comme source de frigories de l'étape e),
- le refroidissement de l'étape e) est obtenu par échange de chaleur à contact direct entre l'eau à la sixième température T6 et la source de frigories,
- le refroidissement de l'étape e) est obtenu par échange de chaleur contact indirect entre l'eau à la sixième température T6 et la source de frigories,
- le refroidissement de l'étape a) est obtenu par échange de chaleur à contact direct entre le fluide à la première température T1 et l'eau à la troisième température T3,
- le refroidissement de l'étape a) est obtenu par échange de chaleur à contact indirect entre le fluide à la première température T1 et l'eau à la troisième température T3, par exemple dans un échangeur à tubes et à calandre,
- la séparation du fluide séché à la septième température T7 est effectuée par un système à adsorption à bascule de pression,
- la séparation du fluide séché à la septième température T7 est effectuée par un système membranaire,
- la première fraction à la neuvième température T9 plus concentrée en CO₂ que le fluide séché à une septième température T7 est comprimée puis purifiée par condensation partielle et/ou distillation et/ou solidification afin de produire une troisième fraction plus concentrée en CO₂ que la première fraction,
- l'eau qui se refroidit dans l'étape d) comprend au moins une partie de l'eau qui se réchauffe dans l'étape a),
- l'eau qui se refroidit dans l'étape d) ne comprend aucune partie de l'eau qui se réchauffe dans l'étape a).

Selon un autre objet de l'invention, il est prévu un appareil de séchage et purification d'un fluide à une première température T1 contenant entre 10 et 50 % molaire de dioxyde de carbone ainsi qu'au moins une impureté plus légère que le dioxyde de carbone choisie dans la liste : oxygène, azote, argon, monoxyde de carbone, méthane, hélium et hydrogène ainsi que de l'eau comprenant :
- des moyens de refroidissement du fluide à la première température T1 jusqu'à une seconde température T2 contre de l'eau à une troisième température T3 inférieure à la première température T1 permettant la condensation partielle de l'eau contenue dans le fluide, l'eau de refroidissement se réchauffant jusqu'à une quatrième température T4,
- des moyens de séparation de l'eau condensée afin d'obtenir un fluide partiellement séché à la seconde température T2,
- un sécheur pour sécher du fluide partiellement séché à la seconde température T2 par passage comprenant un adsorbant et des moyens pour envoyer le fluide partiellement séché circuler à travers l'adsorbant afin d'obtenir un fluide séché à une cinquième température T5,
- des moyens de réchauffement du fluide séché à la cinquième température T5 contre de l'eau qui se refroidit afin d'obtenir de l'eau à une sixième température T6 et un fluide séché à une septième température T7,
- des moyens de refroidissement de l'eau à la sixième température T6 par échange de chaleur avec une source de frigories à une huitième température T8 plus froide que la sixième température T6 générant de l'eau de préférence à la troisième température T3, et
- des moyens pour envoyer l'eau générée, de préférence à la troisième température T3, dans les moyens de refroidissement de l'eau à la sixième
température pour refroidir le fluide à la première température T1 dans les moyens de refroidissement du fluide comme eau de refroidissement.

Selon d'autres aspects facultatifs, l'appareil comprend :
- un premier appareil de séparation pour séparer le fluide séché à la septième température T7 en une première fraction à une neuvième température T9 plus concentrée en CO₂ que le fluide séché à la septième température T7 et une seconde fraction à une dixième température T10 moins concentrée en CO₂ que le fluide séché à la septième température T7,
- une turbine de détente et des moyens pour envoyer au moins une partie de la seconde fraction à la turbine de détente,
- les moyens de refroidissement de l'eau sont des moyens d'échange de chaleur à contact direct entre l'eau à la sixième température T6 et la source de frigories,
- les moyens de refroidissement de l'eau sont des moyens d'échange de chaleur à contact indirect entre l'eau à la sixième température T6 et la source de frigories,
- les moyens de refroidissement du fluide à sécher sont des moyens d'échange de chaleur direct ou indirect, par exemple dans un échangeur à tubes et à calandre,
- l'appareil de séparation est un système à adsorption à bascule de pression,
- l'appareil de séparation est un système membranaire,
- un deuxième appareil de séparation par condensation partielle et/ou distillation et/ou solidification reliée au premier appareil de séparation pour séparer la première fraction afin de produire une troisième fraction plus concentrée en CO₂ que la première fraction,
des moyens pour envoyer de l'eau qui se refroidit contre le fluide séché dans le sécheur comprend au moins une partie de l'eau qui se réchauffe contre le fluide à sécher.

L'invention consiste à récupérer les frigories en sortie du sécheur en les transférant à l'eau refroidie avant son refroidissement par la source de frigories, qui peut être par exemple le reliquat de l'étape de pré-concentration. Pour ce faire, l'eau refroidie échange de la chaleur dans un échangeur à contact indirect (par exemple, un échangeur à plaques et à ailettes ou un échangeur à tubes et à calandre) avec le fluide à séparer séché en sortie du sécheur.

Cette configuration permet de valoriser les frigories qui étaient alors évacuées principalement dans la source de frigories, par exemple le reliquat de l'étape de pré-concentration lors de son réchauffage avant détente. Ainsi, le débit d'eau refroidie circulant peut être augmenté pour la même température froide obtenue après refroidissement par la source de frigories ou pour le même débit une température plus froide peut être atteinte.

Cela permet d'encore plus refroidir la source humide et donc de réduire la taille du sécheur.

En particulier, si une tour de refroidissement à contact direct entre l'eau et la source humide est employée, l'augmentation du débit d'eau fraîche permet d'atteindre des températures à l'entrée du sécheur avec moins de contraintes en termes d'approche, permettant de tirer parti au maximum de l'invention.

Le débit d'eau plus important permet aussi de limiter la température de l'eau après son réchauffement face au fluide à séparer qui se refroidit. L'approche entre le fluide à séparer et l'eau refroidie par la source froide après échange est alors augmentée. Cela permet une augmentation de la compacité du moyen d'échange, voire même de relâcher des contraintes que certaines technologies ne pourraient pas accepter. Une trop faible approche rend impossible industriellement l'utilisation d'un échangeur à tubes et à calandre. Ainsi, la surface d'échange d'un échangeur à contact indirect ou la hauteur d'une tour de refroidissement à contact direct sont réduites.

Enfin, la température à l'entrée de l'étape de pré-concentration, quand présente, est alors augmentée, ce qui peut la rendre plus efficace notamment dans le cas d'une unité d'adsorption à bascule de pression (PSA). Le reliquat du PSA appauvri en CO₂ est aussi disponible à plus haute température minimisant sa demande en chaleur avant sa détente.

L'invention sera décrite de manière plus détaillée en se référant aux figures où :
[FIG.2] représente un procédé selon l'invention,
[FIG.3] représente un procédé selon l'invention.

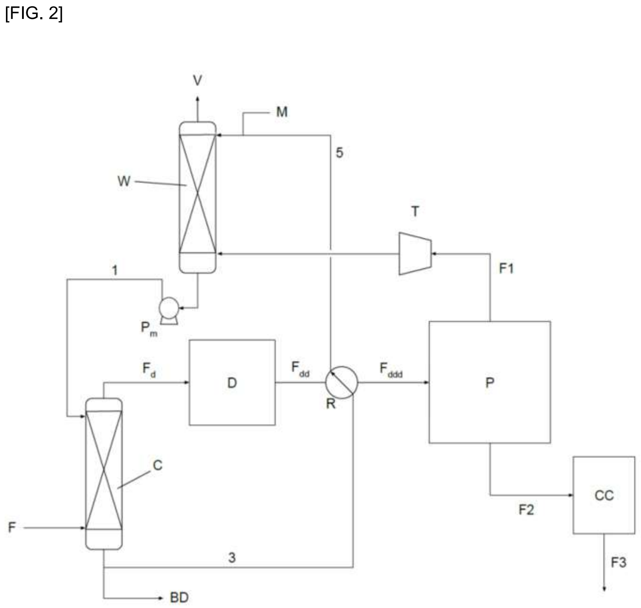

[FIG.2] représente un procédé de séchage et purification d'un fluide F à une première température T1 contenant entre 10 et 50% molaire dioxyde de carbone ainsi qu'au moins une impureté plus légère que le dioxyde de carbone choisie dans la liste : oxygène, azote, argon, monoxyde de carbone, méthane, hélium et hydrogène ainsi que de l'eau. Ce fluide F peut par exemple provenir d'une cimenterie, d'une usine de production de chaux, d'une usine de production d'acier. Le fluide F est à l'état gazeux et est refroidi à partir d'une première température T1 jusqu'à une seconde température T2 contre de l'eau à une troisième température T3 inférieure à la première température T1 dans une tour d'échange de chaleur et de matière par contact direct C avec l'eau 1 envoyée en tête de la tour, le fluide F arrivant en bas de la tour. De l'eau contenue dans le fluide F est refroidie par le contact avec l'eau 1 à une température T2 inférieure à la première température T1 et en conséquence de l'eau contenue dans le fluide F se condense. L'eau 3 qui sort en cuve de la tour à une quatrième température T4 comprend de l'eau condensée contenue dans le fluide F.

Le fluide partiellement séché F_{d} sortant en tête de la tour C à la seconde température T2, inférieure à la première température T1, contient encore de l'eau et est séché dans un sécheur D par adsorption à bascule de température pour produire un fluide sec F_{dd} à une cinquième température T5.

Le fluide sec F_{dd} à la cinquième température T5 est réchauffé dans un échangeur de chaleur à contact indirect R contre de l'eau, par exemple au moins une partie du débit d'eau 3 afin d'obtenir de l'eau 5 à une sixième température T6 et un fluide séché F_{ddd} à une septième température T7 supérieure à la cinquième température T5.

L'eau 5 refroidie dans l'échangeur de chaleur R est de nouveau refroidie par une source de frigories et renvoyée en tête de la tour C. Ici le refroidissement a lieu dans une tour W à contact direct : la source de frigories est un gaz F1 détendu dans une turbine T qui refroidit l'eau 5 provenant de l'échangeur R dans la tour de refroidissement W à échange de chaleur direct produisant un gaz réchauffé V en tête de la tour W et l'eau refroidie 1 en bas de la tour W.

Le fluide sec F_{ddd} à la septième température T7 est séparé dans une unité P par adsorption à bascule de pression et produit au moins un gaz F2 enrichi en CO₂ et appauvri en au moins un autre composant et un gaz F1 enrichi en l'au moins un autre composant et appauvri en CO₂. Le gaz F1 est détendu dans la turbine T éventuellement après avoir été réchauffé.

Le gaz F2 est comprimé, refroidi et séparé par condensation partielle et/ou distillation et/ou solidification dans l'unité de séparation CC formant un produit F3 enrichi en CO₂.

**[Tab.1]**

| **Température** | **Courant** | **Intervalle typique (°C)** |
|---|---|---|
| T1 | Fluide F | [10 - 60] |
| T2 | Fluide F_{d} | [5 - 15] |
| T3 | Eau 1 | [1 - 10] |
| T4 | Eau 3 | [10 - 60] |
| T5 | Fluide F_{dd} | [10 - 20] |
| T6 | Eau 5 | [10 - 40] |
| T7 | Fluide F_{ddd} | [20 - 60] |
| T8 | Source de frigorie | [-10 - 10] |

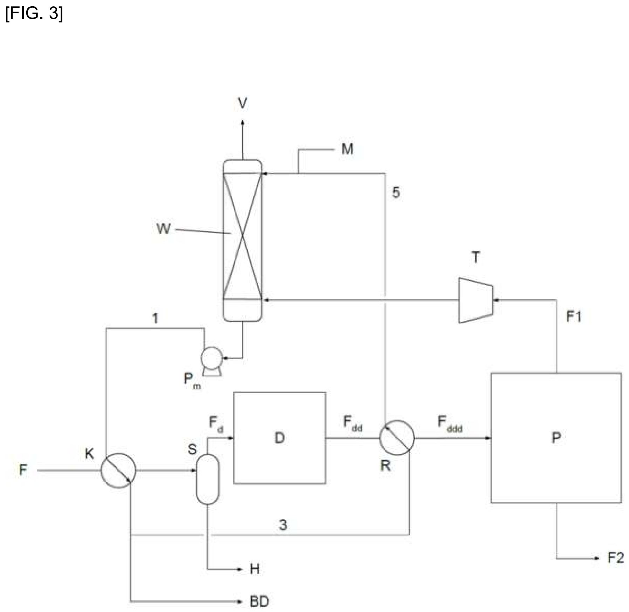

A la différence de la [FIG.2], [FIG.3] ne comprend pas de tour C. Le fluide F est refroidi par un refroidisseur K par échange de chaleur indirect avec de l'eau 1 provenant de la tour W. Le fluide F y est refroidi pour condenser de l'eau qu'il contient et l'eau condensée H est enlevée d'un séparateur S qui produit également le fluide séché F_{d}. Le fluide partiellement séché F_{d} est séché dans un sécheur D. L'eau 1 ayant refroidi le refroidisseur K est envoyée au moins en partie comme débit 3 vers l'échangeur de chaleur R pour réchauffer le fluide séché F_{dd} en aval du sécheur D et l'eau refroidie 5 est renvoyée à la tour W afin d'être refroidie de nouveau à la température de l'eau 1.

De même que pour la [FIG.2], le fluide sec F_{ddd} à la septième température T7 est séparé dans une unité P par adsorption à bascule de pression et produit au moins un gaz F2 enrichi en CO₂ et appauvri en au moins un autre composant et un gaz F1 enrichi en l'au moins un autre composant et appauvri en CO₂. Le gaz F1 est détendu dans la turbine T éventuellement après avoir été réchauffé.

Le gaz F2 est comprimé, refroidi et séparé par condensation partielle et/ou distillation et/ou solidification dans l'unité de séparation CC (non illustrée, voir [FIG.2] ) formant un produit F3 enrichi en CO₂.

Pour les deux figures [FIG.2] et [FIG.3], l'unité P peut être une unité de séparation membranaire.

Pour les deux figures [FIG.2] et [FIG.3], une partie BD de l'eau refroidie provenant de la tour C ou du refroidisseur K peut être retirée de la circulation pour éviter l'accumulation d'éléments contenus dans le fluide F, par exemple des impuretés solides, telles que des poussières.

Pour les deux figures [FIG.2] et [FIG.3], de l'eau M peut être rajoutée au cycle pour compenser les pertes d'eau, par exemple quittant l'appareil dans le gaz V.

## Revendications

1. Procédé de séchage et purification d'un fluide (F) à une première température T1 contenant entre 10 et 50 % molaire de dioxyde de carbone ainsi qu'au moins une impureté plus légère que le dioxyde de carbone choisie dans la liste : oxygène, azote, argon, monoxyde de carbone, méthane, hélium et hydrogène ainsi que de l'eau comprenant les étapes suivantes:
a) refroidissement (C) du fluide à la première température T1 jusqu'à une seconde température T2 contre de l'eau (1) à une troisième température T3 inférieure à la première température T1 et condensation partielle de l'eau contenue dans le fluide, l'eau de refroidissement se réchauffant jusqu'à une quatrième température T4
b) séparation de l'eau condensée (3,BD,H) afin d'obtenir un fluide (F_{d}) partiellement séché à la seconde température T2
c) séchage du fluide partiellement séché à la seconde température T2 par passage à travers un adsorbant (D) afin d'obtenir un fluide séché (F_{dd}) à une cinquième température T5
d) réchauffement (R) du fluide séché à la cinquième température T5 contre de l'eau qui se refroidit afin d'obtenir de l'eau (5) à une sixième température T6 et un fluide séché (F_{ddd}) à une septième température T7
e) refroidissement (W,K) de l'eau à la sixième température T6 par échange de chaleur avec une source de frigories (F1) à une huitième température T8 plus froide que la sixième température T6 générant de l'eau (1) de préférence à la troisième température T3 et
f) utilisation de l'eau générée, de préférence à la troisième température T3, lors de l'étape e) pour refroidir le fluide à la première température T1 lors de l'étape a).

2. Procédé selon la revendication précédente dans lequel le fluide séché à la septième température T7 (F_{ddd}) est séparé (P) en une première fraction (F2) à une neuvième température T9 plus concentrée en CO₂ que le fluide séché à la septième température T7 et une seconde fraction (F1) à une dixième température T10 moins concentrée en CO₂ que le fluide séché à la septième température T7

3. Procédé selon la revendication 2 dans lequel la seconde fraction (F1) à la dixième température T10 est détendue (T), optionnellement après chauffage, générant une seconde fraction à la huitième température T8 utilisée comme source de frigories de l'étape e).

4. Procédé selon l'une des revendications précédentes dans lequel le refroidissement de l'étape e) est obtenu par échange de chaleur à contact direct (W) entre l'eau à la sixième température T6 et la source de frigories (F1).

5. Procédé selon l'une des revendications 1 à 3 dans lequel le refroidissement de l'étape e) est obtenu par échange de chaleur contact indirect entre l'eau à la sixième température T6 et la source de frigories (F1).

6. Procédé selon l'une des revendications précédentes dans lequel le refroidissement (C) de l'étape a) est obtenu par échange de chaleur à contact direct entre le fluide (F) à la première température T1 et l'eau (1) à la troisième température T3.

7. Procédé selon l'une des revendications 1 à 5 dans lequel le refroidissement de l'étape a) est obtenu par échange de chaleur à contact indirect (K) entre le fluide (F) à la première température T1 et l'eau (1) à la troisième température T3, par exemple dans un échangeur à tubes et à calandre.

8. Procédé selon l'une des revendications 2 ou 3 à 7 quand dépendante de la revendication 2 dans lequel la séparation (P) du fluide séché à la septième température T7 (F_{ddd}) est effectuée par un système à adsorption à bascule de pression

9. Procédé selon l'une des revendications 2 ou 3 à 7 quand dépendante de la revendication 2 dans lequel la séparation (P) du fluide séché à la septième température T7 (F_{ddd}) est effectuée par un système membranaire

10. Procédé selon la revendications 8 ou 9 dans lequel la première fraction (F2) à la neuvième température T9 plus concentrée en CO₂ que le fluide séché à une septième température T7 (F_{ddd}) est comprimée puis purifiée par condensation partielle et/ou distillation et/ou solidification (CC) afin de produire une troisième fraction (F3) plus concentrée en CO₂ que la première fraction.

11. Procédé selon l'une des revendications précédentes dans lequel l'eau (3) qui se refroidit dans l'étape d) comprend au moins une partie de l'eau qui se réchauffe dans l'étape a).
